**Europäisches Patentamt**

**European Patent Office**

**Office européen des brevets**

(19)

(11) Publication number : **0 307 750 B2**

# (12) NEW EUROPEAN PATENT SPECIFICATION

(45) Date of publication of the new patent specification : **22.11.95 Bulletin 95/47**

(51) Int. Cl.$^6$ : **G11B 7/24,** G11B 7/26

(21) Application number : **88114472.9**

(22) Date of filing : **05.09.88**

(54) Use of a storage meedium in a method of recording information.

(30) Priority : **14.09.87 JP 230004/87**
**14.09.87 JP 230005/87**

(43) Date of publication of application :
**22.03.89 Bulletin 89/12**

(45) Publication of the grant of the patent :
**21.11.91 Bulletin 91/47**

(45) Mention of the opposition decision :
**22.11.95 Bulletin 95/47**

(84) Designated Contracting States :
**DE NL**

(56) References cited :
**EP-A- 0 184 452**
**EP-A- 0 239 166**
**US-A- 4 647 944**

(73) Proprietor : **KABUSHIKI KAISHA TOSHIBA**
**72, Horikawa-cho,**
**Saiwai-ku**
**Kawasaki-shi, Kanagawa-ken 210, Tokyo (JP)**

(72) Inventor : **Suzuki, Katsumi c/o Patent Division**
**Kabushiki Kaisha Toshiba**
**1-1 Shibaura 1-chome**
**Minato-ku Tokyo 105 (JP)**

(74) Representative : **Henkel, Feiler, Hänzel &**
**Partner**
**Möhlstrasse 37**
**D-81675 München (DE)**

EP 0 307 750 B2

## Description

The present invention relates to a use of an information storage medium, such as an optical disk, wherein information can be recorded thereon or erased therefrom by way of a phase transformation of a recording layer of the disk, upon it being irradiated by a light beam such as a laser beam.

A phase-transformation type optical disk is a typical example of an optical disk which permits information erasure. When a portion of a recording layer of a phase transformation-type optical disk is irradiated with a laser beam, that portion undergoes a phase transformation between a crystalline phase and an amorphous phase, depending on the conditions under which the laser beam is radiated, whereby information is either recorded thereon or erased therefrom.

Materials able to undergo such phase transformation include semiconductors, semiconductor compounds, and metal alloys (such as Te, Ge, TeGe, InSe, SbSe, and SbTe), such materials can be selectively set in a crystalline state or an amorphous state. The complex indices of refraction of these materials, which is given by N = n - ik, differing considerably between one of these states and the other. The above two states can be alternately reversed by means of a heat treatment process employing a laser beam, thereby enabling information to be either recorded thereon or erased therefrom (S.R. Ovshinsky, Metallurgical Transactions $\underline{2}$, 641, 1971).

However, all of those materials (mentioned above) whose phase can be changed between amorphous and crystalline phases, thereby to enable the recording or erasure of information, have a low crystallization rate, as a result of which the respective periods of time required for initial crystallization and information erasure crystallization are undesirably long.

Besides the method described above, there exists a method wherein information is recorded and erased by way of reversible phase transformation between different crystalline phases, through changing the conditions under which a laser beam is radiated (Japanese Patent Disclosure (Kokai) No. Sho61-134944). A typical example of a material capable of undergoing reversible phase transformation is an In-Sb alloy.

Upon being irradiated by a low-power laser beam having a relatively long pulse, the grains of an In-Sb alloy thin film are converted into small-crystal grains. These small-crystal grains can be quickly grown into relatively large crystal grains upon radiation of a high-power laser beam having a short pulse. The complex indices of refraction of each of these two crystal structures differ considerably. When information is read from a recording layer, upon radiation of a laser beam thereinto, the crystal states are discriminated on the basis of a difference between amounts of light reflected by the recording layer.

Among the In-Sb systems, an $In_{50}Sb_{50}$ intermetallic compound has a high crystallization rate. However, it is difficult to actually record information for the reason that Sb segregation (described later) does not occur.

When the In content of the recording layer is higher than the Sb content, complete phase transformation cannot always be assured, with the result that recording of information is sometimes not possible.

When the Sb content of the recording layer is higher than the In content upon radiation of a laser beam thereinto, the recording layer is converted to a mixed phase of InSb intermetallic compound crystal grains and Sb crystal grains. The size of the Sb crystal grains changes in accordance with the conditions under which the laser beam is radiated, thus the information can be recorded.

However, since Sb has a low crystal growth rate, the recording layer initialization time and erase time are prolonged, thereby rendering high-speed operation impossible. More specifically, there is a tendency for initialization failure and incomplete erasure to occur. In the write mode, when the optical disk is rotated at high speed, crystal grains cannot grow sufficiently, thus resulting in unsatisfactory recording.

Prior art document EP-A-224 313 discloses an optical recording medium having a substrate and a recording layer. The recording layer has in one example the composition $(In_xSb_{1-x})_{95}Te_5$. The value of x is preferably 0.48 - 0.52. According to the description this material is subjectable to reversible phase transformations by changing the conditions under which a light beam is irradiated.

In document US-A-3716844 it is proposed to use a mixed phase in a material having an amorphous to crystalline transition so as to obtain grey tones. The use as memory device is indicated too.

It is an object of the present invention to provide use of an information storage medium in a method of recording information and enabling good information storage properties and initialization of a recording layer and erasure of information at high speed.

To solve this object the present invention provides use of a storage medium in a method of recording information as specified in claim 1.

The information storace medium comprises a substrate and a recording layer supported on the substrate and subject able to reversible phase transformation between different phases by changing conditions under which a light beam is radiated thereonto, the recording layer containing an $(In_{100-x}Sb_x)_{100-y}Te_y$ alloy, wherein x and y are in atomic % and x falls within a range of $48 \leqq x \leqq 52$ and y falls within a range of $0.05 \leqq y \leqq 5$.

The recording layer is subject to a locally reversible phase transformation between a crystalline phase and a mixed phase wherein crystal grains are mixed in an amorphous phase by changing conditions under which a light beam is radiated.

The In-Sb-Te alloy having a composition falling within the range described above is subjected to phase transformation between a mixed phase of InSb intermetallic compound crystal grains and InTe or SbTe crystal grains, and a mixed phase wherein InSb crystal grains are mixed in amorphous InTe or SbTe. Namely, the above alloy is subjected to phase transformation between a crystalline phase and a mixed phase wherein crystal grains are mixed in an amorphous phase. Since such phase transformation between the crystalline phase and the mixed phase can occur at a high speed, when the recording layer has the above composition, recording and erasure of information can be performed at a very high speed. Since an alloy having the above composition has a high crystallization rate, initial crystallization of a recording layer which is normally amorphous in a form as deposited can be performed at a high speed.

The recording layer contains Te which can be easily transformed into an amorphous state, and an information recording portion (to be referred to as a recording mark hereinafter) contains crystal grains. Therefore, a signal level (a contrast between a recorded mark portion and a non-recorded portion) of recorded information is high and information is highly stable. In other words, good recording characteristics can be obtained.

A more complete appreciation of the invention and many of the attendant advantages thereof will be readily gained as the same become better understood by reference to the following detailed description, considered in connection with the accompanying drawings, of which:

Fig. 1 is a sectional view of an information storage medium (optical disk) according to an embodiment of the present invention;

Fig. 2 is a schematic view showing a sputtering apparatus used in the fabrication of the information storage medium (optical disk) shown in Fig. 1;

Fig. 3 is a schematic view showing an optical system for recording information in the information storage medium (Fig. 1) or reading out or erasing it therefrom;

Fig. 4 is a graph showing the relationship between the Te content of the recording layer and the reproduction signal; and

Fig. 5 is a graph showing the relationship between the pulse width of the radiated laser beam and a change in reflectivity.

The present invention will be described in detail hereinafter, with reference to a preferred embodiment.

A recording layer is formed $(In_{100-x}Sb_x)_{100-y}$ alloy, wherein x falls within a range of $48 \leqq x \leqq 52$ and y falls within a range of $0.05 \leqq y \leqq 5$. When the recording layer is irradiated with an optical beam, it undergoes a phase transformation between a mixed phase of InSb intermetallic compound small-crystal grains and InTe or SbTe small-crystal grains and a mixed phase in which InSb crystal grains are mixed in amorphous InTe or SbTe. Upon initialization or information erasure, the recording layer is set in a mixed phase of InSb intermetallic compound small-crystal grains and InTe or SbTe small-crystal grains. Upon information recording, the recording layer is set in a mixed phase in which InSb small-crystal grains are mixed in amorphous InTe or SbTe.

In this manner, when a recording layer undergoes a phase transformation between a crystalline phase and a mixed phase in which crystal grains are mixed in an amorphous phase, thus recording/erasing information, inconveniences occurring in a conventional case wherein a recording layer undergoes phase transformation between crystal and amorphous phases or between different crystalline phases can be prevented. Namely, when information recording and erasure are performed utilizing such phase transformation between a crystalline phase and a mixed phase, the initialization and erase speeds can be increased since crystallization and phase transformation rates are high. A recording mark can be set in a mixed phase of amorphous and crystalline phases. Therefore, with the crystal grains present in the recording mark, the recording stability can be maintained. Also, a predetermined recording level can be maintained with an amorphous phase containing Te in the recording mark.

The reason of setting the composition of the recording layer in the range described above will be described.

As described above, an In-Sb alloy forms an intermetallic compound when the In-Sb and Sb contents are both 50 atomic %. The crystallization rate is maximum with this composition. In this case, however, since Sb segregation does not occur, it is difficult to record information. In order to enable information recording and to increase the initialization and erase speeds, it may be effective to add a third element to the InSb intermetallic compound. However, when the composition of In and Sb is not variable, manufacture becomes considerably difficult and manufacture yield in mass production is degraded. For this reason, the In-Sb alloy as a basic composition must have a predetermined composition range. On the other hand, when the Sb content is higher than that of In-Sb intermetallic compound (e.g., $In_{45}Sb_{55}$), Sb segregation occurs to degrade the crystallization rate, resulting in low initialization and information erase speeds. However, according to an experiment conducted by the present inventor, it was found that when the Sb content differs within a range of $\pm 2$ atomic % that of an InSb intermetallic compound, the crystallization rate is not degraded. Based upon this finding, the composition of the InSb alloy is set to be $In_{100-x}Sb_x$ wherein x falls within a range of $48 \leqq x \leqq 52$.

An element that facilitates information recording, i.e., that increases the reproduction signal level is required as the third component. An example of such an element is Te. Te is a material that can be set in an amorphous phase quite easily. When Te is added to $In_{100-x}Sb_x$ ($48 \leqq x \leqq 52$) described above, during recording, the content of an amorphous portion in a recording mark is increased in proportion to the content of added Te. Namely, when the content of Te is increased, the content of the amorphous portion of InTe or SbTe in the recording mark becomes larger than that of the InSb small-crystal grains, and the reproduction signal level from the recording mark is increased. However, since InTe and SbTe in the amorphous phase have a relatively low crystallization rate, as the content of Te is increased, the initialization and erase speeds are decreased. When the optical disk is rotated at a high speed, initialization failure and incomplete erasure become conspicuous. In other words, although the crystallization rate of Te itself is as high as several tens of nanoseconds, when the content of the InTe or SbTe alloy is increased, the crystallization rate of the composition is decreased. In this case, when the Te content exceeds 5 atomic %, the crystallization rate becomes excessively low, resulting in insufficient initialization and erase speeds. On the contrary, since the $In_{100-x}Sb_x$ ($48 \leqq x \leqq 52$) alloy described above does not substantially cause Sb segregation, the recording signal level is small. In this case, the Te content must not be less than 0.05 atomic % in order to effectively record information. Therefore, y is set to fall within the range of $0.05 \leqq y \leqq 5$, as described above.

In the $(In_{100-x}Sb_x)_{100-y}Te_y$ alloy thin film described above, the phase transformation upon information recording/erasure does not occur between crystal and amorphous phases or different crystal phases but between a fine crystalline phase and a mixed phase in which small-crystal grains exist in an amorphous phase, which is a novel phase transformation. Thus, the initialization and erase speeds can be greatly increased while a predetermined recording level is maintained.

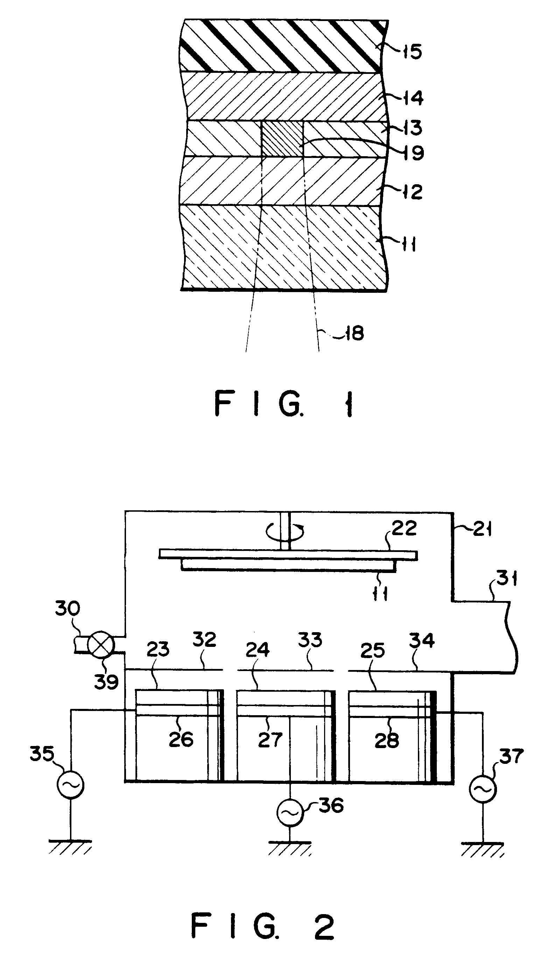

An information storage medium of this embodiment has an arrangement as shown in Fig. 1. Substrate 11 is made of a transparent material, e.g., glass and polycarbonate resin, whose deterioration over time is small. A groove is formed in substrate 11. Protective layer 12, recording layer 13, and protective layers 14 and 15 are formed on substrate 11 in this order. Layers 12 and 14 are made of $SiO_2$ to prevent layer 13 from being melted to form a hole. Layer 15 is made of an ultraviolet curable resin and has a function to prevent the upper surface of the disk from being damaged. Layer 13 is made of the $(In_{100-x}Sb_x)_{100-y}Te_y$ alloy (wherein x and x and y are in atomic % and fall within a range of $48 \leqq x \leqq 52$ and $0.05 \leqq y \leqq 5$, respectively), described above. Upon irradiation with a laser beam, layer 13 undergoes a phase transformation between a fine crystalline phase and a mixed phase in which small-crystal grains exist in an amorphous phase depending on the conditions under which the laser beam is radiated.

While it is preferable to form protective layers 12, 14, and 15, formation thereof may, however, be omitted.

A method of fabricating the information storage medium (optical disk) of this embodiment will now be described in detail, with reference to Fig. 2. Fig. 2 is a schematic view of a sputtering apparatus for forming the recording layer.

Reference numeral 21 denotes a cylindrical reaction chamber with exhaust port 31 and gas inlet port 30 formed in its wall. A cryopump is connected to exhaust port 31, for evacuating chamber 21. An argon supply device (not shown) is connected to gas inlet port 30, for supplying argon gas to chamber 21, through gas inlet port 30. Disk-like substrate 11 is horizontally supported by rotary base 22 in the upper portion of reaction chamber 21. When rotary base 22 is rotated by a motor (not shown), substrate 11 is rotated therewith. Plate electrodes 26, 27, and 28 are arranged such that they oppose substrate 11 in chamber 21. Electrodes 26, 27, and 28 are connected to RF (Radio Frequency) power sources 35, 36, and 37, respectively. In-Sb alloy target 23, having a predetermined composition, $SiO_2$ target 24, and Te target 25 are placed on electrodes 26, 27, and 28, respectively. Shutters 32, 33, and 34 are arranged between respective targets 23, 24, and 25 and substrate 25.

In order to perform sputtering, using the sputtering apparatus having the above arrangement, reaction chamber 21 is first evacuated by the cryopump to a vacuum of $10^{-6}$ Torr. Thereafter, argon gas is supplied to chamber 21 at a flow rate of, for example, 10 SCCM, to adjust the gas pressure (e.g., 5 m Torr) therein. RF power of, for example, 200 W is supplied from RF power source 36 to $SiO_2$ target 24 while substrate 11 is being rotated at 60 rpm, to form protective layer 12 thereon. In this case, only shutter 33 is kept open. Subsequently, shutter 33 is closed and shutters 32 and 34 are opened. At the same time, RF power of, for example, 200 W is supplied from RF power source 35 to target 23, with 20W being supplied from RF power source 37 to target 25, thereby to form recording layer 13 of an InSbTe alloy having a predetermined composition. RF power sources 35 and 37 are then deenergized, while RF power source 36 is energized once again. Protective film 14 is formed on recording layer 13 under the same conditions as in the case of protective film 12.

When a recording layer is to be formed, a target having the composition of the recording layer to be formed can be formed. Alternatively, In, Sb, and Te targets can be used to perform three-element co-sputtering.

A sample thus prepared is removed from reaction chamber 21, and an ultraviolet curable resin is spin-coated on the sample. The resin is cured with ultra-violet rays, thereby forming protective layer 15.

The operation of the information storage medium (optical disk) of this embodiment will now be described below.

### Initialization

Recording layer 13 is amorphous in a form of as deposited. Therefore, a laser beam having a relatively low power and a long pulse width is continuously radiated onto layer 13 to melt it. Then, layer 13 is gradually cooled to solidify so that it undergoes a phase transformation to a crystalline phase of InSb intermetallic compound small-crystal grains and InTe or SbTe small-crystal grains.

### Recording

Laser beam 13 having a relatively high power and a short pulse width is radiated onto initialized layer 13 to melt it. Then, layer 13 is quickly cooled to form recording mark 19 of a mixed phase comprising InSb intermetallic compound small-crystal grains and amorphous InTe or SbTe.

### Reading

A laser beam having a relatively low power is radiated onto recording layer 13 to detect the intensity of light reflected by layer 13, thereby reading information.

### Erasure

A laser beam is radiated onto recording mark 19 under the conditions substantially the same as those for initialization. Mark 19 is melted and gradually cooled to solidify, in the same manner as in initialization, and is returned to a mixed state of $In_{50}Sb_{50}$ small-crystal grains and InTe or SbTe small-crystal grains. As a result, information is erased.

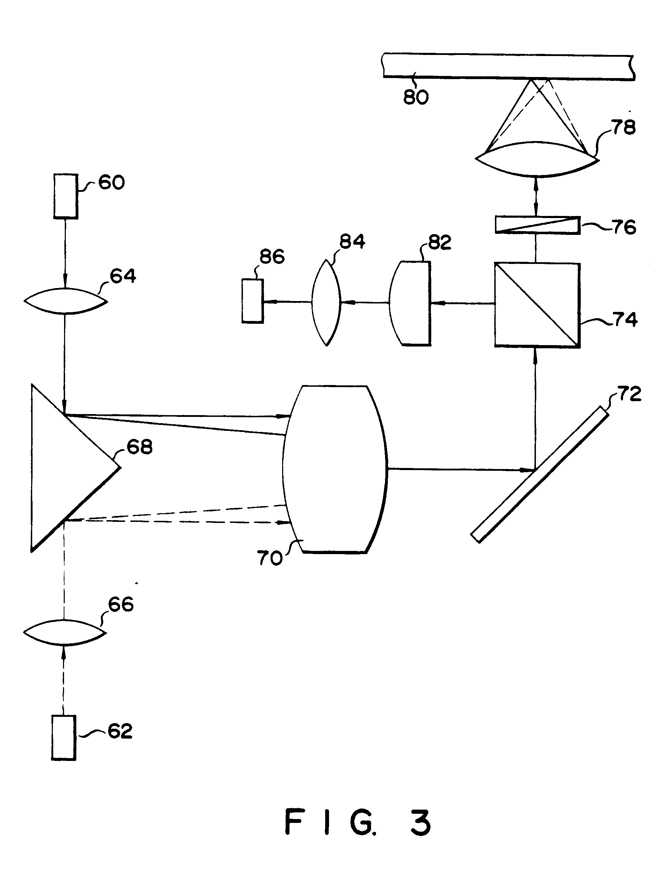

Referring now to Fig. 3, a control optical system, which is used to record, erase, or read information on or from the information storage medium (optical disk) according to this embodiment, will be described in detail.

The optical system comprises semiconductor laser diode 60 for recording and reading information and semiconductor laser diode 62 for erasing information recorded on the optical disk. A laser beam emitted from diode 60 or 62 is focused by lens 64 or 66, and reflected by mirror 68. The reflected light from mirror 68 enters lens 70 in parallel relation to the optical axis, and is then reflected by mirror 72. The reflected laser beam from mirror 72 is introduced into beam splitter 74 and then into polarizing plate 76, whose thickness is equal to about one quarter of the wavelength of the applied laser beam. Then, the laser beam enters lens 78 and is focused thereby on optical disk 80. Lens 78 is movably supported by a drive mechanism (not shown), which serves to adjust the position of lens 78 radially and axially. Disk 80 is rotated at a speed of 10 m/s.

The reflected light from optical disk 80 enters lens 78 again and passes through plate 76. At this time, the light is polarized as it moves back and forth within plate 76, so that it is reflected by beam splitter 74 and deflected toward converging lens 82 and column lens 84. The reflected light from optical disk 80 is detected by detector 86. Lens 78 is moved by the drive mechanism so that the converged spot from lens 78 focuses on disk 80.

In recording information, a pulsating light beam (recording beam) corresponding to the information to be recorded is emitted from laser diode 60. The recording beam is applied to a predetermined portion of the recording layer of optical disk 80. The irradiated portion develops into a recording mark after undergoing the aforementioned phase transformation.

In reading information, a laser beam with an output one-tenth that of the recording beam is emitted continuously from laser diode 60. This laser beam passes through the substrate of optical disk 80, and is reflected by the recording layer. Detector 86 detects the intensity of the reflected light from the recording layer. In this case, the recording mark and the other portion of the recording layer are different in crystal grain size, as mentioned before, so that reflected light beams from these different portions are different in intensity. Thus, based on the difference in intensity between the reflected beams, the recorded information can be read securely.

In erasing information, an erasing laser beam is emitted continuously from laser diode 62 to be applied to the recording mark. Thereupon, the recording mark undergoes phase transformation such that it changes back into a fine crystal resembling the other portion, in the manner as aforesaid. As a result, the information is erased.

Examples of characteristic tests on information storage media manufactured according to the present invention will now be described.

Example 1

A 1,000-Å thick $SiO_2$ layer was formed on a grooved polycarbonate substrate with the argon sputtering apparatus shown in Fig. 2, and an 800-A thick $(In_{48}Sb_{52})_{98}Te_2$ three-element alloy film was formed thereon to form a recording layer. A 1,000-Å thick $SiO_2$ layer was formed on the recording layer. Then, a 10-$\mu$m thick ultraviolet curing resin film was formed on the $SiO_2$ layer, thereby forming an optical disk as sample A.

In this case, the composition of the $(In_{48}Sb_{52})_{98}Te_2$ three-element alloy constituting the recording layer was strictly adjusted since it is the most important point of the present invention.

Following the same procedures as for sample A except that a recording layer consisted of an $In_{43}Sb_{57}$ alloy, sample B was prepared. The dynamic characteristics of samples A and B were evaluated using a dynamic characteristic evaluation device. In evaluation, a semiconductor laser with a wavelength of 830 nm was used. For initialization, a laser beam with a power of 7 mW was continuously radiated. For recording, a laser beam with a power of 12 mW, a pulse width of 100 nsec and a duty ratio of 50% was pulse-radiated. For erasure, a laser beam with the same power as for initialization was continuously radiated. Table 1 shows the results.

Table 1

| | | Rotational Frequency (rpm) | Number of Initialization Rotations (times) | Reproduction Signal of Recording mark (mV) | Incomplete Erasure (mV) |
|---|---|---|---|---|---|
| Sample | A | 400 | 1 | 80 | 0 |
| | | 800 | 1 | 80 | 0 |
| | | 1,200 | 1 | 80 | 0 |
| | | 1,800 | 2 | 70 | 0 |
| Sample | B | 400 | 3 | 120 | 10 |
| | | 800 | 6 | 70 | 50 |
| | | 1,200 | 11 | 30 | 30 |
| | | 1,800 | Cannot be Initialized | - | - |

The rotational frequency of the disk was set at 400, 800, 1200, and 1,800 rpm. In Table 1, the number of initialization rotations indicates the number of rotations of the disk required for crystallizing a single track, and the reproduction signal of recording mark indicates the amplitude of an AC signal with respect to the DC component in reproduction of the recorded portion. In the column of the incomplete erasure, the level of remaining AC signals after the laser beam is radiated onto the recording mark for erasure is shown.

As a result, it is found that sample A requires a smaller number of initialization rotations and has a lower unerased signal level than those of sample B. This tendency is conspicuous as the rotational frequency of the disk is increased. In particular, when the rotational frequency of the disk was set at 1,800 rpm, sample A was initialized upon only two initialization rotations where sample B was not initialized at all. Regarding the recording characteristics, sample A is superior to sample 8. That is, even when the rotational frequency of the disk of sample A is increased, the degradation in reproduction signal level is small, whereas in sample B as the rotational frequency of the disk is increased, the reproduction signal level is greatly degraded. In sample B, the recording mark is in a mixed state of InSb small-crystal grains and Sb large-crystal grains. As the rotational frequency of the disk is increased, Sb crystal growth upon laser beam radiation becomes insufficient. On the contrary, this is not the case with sample A. Even when the rotational frequency of the disk is high, the signal level of the recorded information is sufficiently high.

Example 2

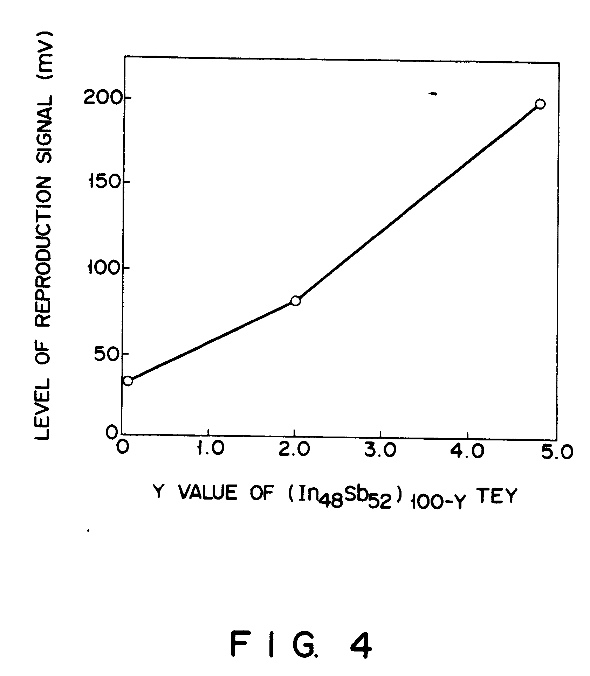

The recording layer was made of an $(In_{48}Sb_{52})_{100-y}Te_y$ alloy by changing the value of y, thereby preparing an optical disk sample having the same layer structure as that of Example 1. The obtained disk was subjected to dynamic characteristics evaluation. Fig. 4 shows the result.

Fig. 4 shows a graph of a relationship between y values and reproduction signals of the recording mark. The y values are plotted along the axis of abscissa and the reproduction signals of the recording mark are plotted along the axis of ordinate. Fig. 4 shows a case wherein the linear speed of the disk was 5.0 m/sec. It is apparent from Fig. 4 that as the Te content is increased, the signal level of the reproduction signal is increased. More specifically, the higher the Te content, the better the recording characteristics. However, when the Te content exceeded 5 atomic %, the level of the unerased signals was increased upon information erasure, and the erasure characteristics were degraded. This is because as the Te content was increased, the content of amorphous InTe or SbTe having a small crystallization rate was increased in the recording mark.

Example 3

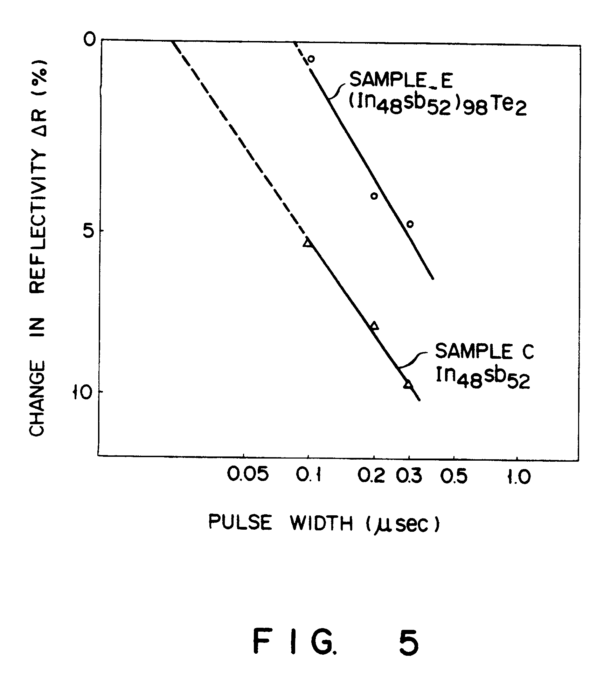

Three samples C, D, and E having the same layer structure as those of Examples 1 and 2 were prepared. The recording layers of samples C, D, and E were made of $In_{48}Sb_{52}$, $In_{45}Sb_{55}$, and $(In_{48}Sb_{52})_{98}Te_2$ alloys, respectively. Samples C, D, and E were subjected to dynamic characteristics evaluation. For the evaluation test, a pulsating laser beam having a power of 9 mW was radiated onto an amorphous recording layer immediately after film formation to determine a pulse width required for crystallizing the beam irradiated portion. In this case, since the minimum laser pulse width of the measuring apparatus was 100 nsec, a pulse width smaller than this was obtained by extrapolation using a graph showing a relationship between a pulse width and a change in reflectance. Fig. 5 shows, with respect to samples C and E, the relationship between the pulse width of the radiated laser beam and a change in reflectivity ($\Delta R$). Referring to Fig. 5, those values of the pulse width indicated at the points from which the reflectivity begins to change (i.e., the values indicated at the intersections between the broken-line portions of the two linear lines of the graph and the line representing the zero point of $\Delta R$) were used as the pulse widths for crystallization. Tale 2 shows the results.

Table 2

| Sample | Composition | Crystallization Pulse Width |
|---|---|---|
| C | $In_{48}Sb_{52}$ | 20 nsec |
| D | $In_{45}Sb_{55}$ | 2 ~ 3 μsec |
| E | $(In_{48}Sb_{52})_{98}Te_2$ | 85 nsec |

As shown in Table 2, it was confirmed that crystallization pulse widths of samples C and E were 20 nsec and 85 nsec, respectively, resulting in crystallization rates considerably higher than in a case of a crystallization pulse width of 100 nsec. On the other hand, the crystallization pulse width of sample D was 2 to 3 μsec, resulting in a low crystallization rate. Regarding the recording characteristics, sample C did not substantially allow recording since Sb segregation was considerably small, whereas those of samples D and E had good characteristics. From these results, it was confirmed that sample E which was within the range of the present invention had good initialization, erasure, and recording characteristics.

Any alloy other than the $(In_{100-x}Sb_x)_{100-y}Te_y$ alloy can be used as a material of a recording layer as long as it can undergo phase transformation between a crystalline phase and a mixed phase wherein crystal grains exist in an amorphous phase, at a high speed.

**Claims**

1.  Use of a storage medium comprising a substrate (11); and a recording layer (13) supported on said substrate (11) and containing an $(In_{100-x}Sb_x)_{100-y}Te_y$ alloy, wherein x and y are in atomic % and x falls within a range of $48 \leq x \leq 52$ and y falls within a range of $0.05 \leq y \leq 5$;
    in a method of recording information, comprising the steps of:
    initializing said recording layer (13) by continuous irradiation with a light beam having a low power and a long pulse width to make said recording layer (13) in a crystalline phase;
    recording information by irradiating the initialized layer (13) with a pulse-like light beam having a high power and a short pulse width to convert the crystalline phase into a mixed phase in which crystal grains exist in an amorphous phase; and

7

erasing recorded information by irradiating a light beam having a low power and a long pulse width to convert the mixed phase into the crystalline phase.

2. Use according to claim 1, characterized in that said method further comprises a step of forming a first protective layer between said substrate and said recording layer.

3. Use according to claim 2, characterized in that said method further comprises a step of forming a second protective layer on said recording layer.

4. Use according to claim 3, characterized in that said method further comprises a step of forming a surface layer on said second protective layer.

5. Use according to claim 3, characterized in that said first and second protective layers contain a dielectric material.

6. Use according to claim 4, characterized in that said surface layer contains a resin.


## Patentansprüche

1. Verwendung eines Speichermediums, umfassend ein Substrat (11) und eine Aufzeichnungsschicht (13), die auf dem Substrat (11) gelagert ist und eine Legierung der Formel $(In_{100-x}Sb_x)_{100-y}Te_y$, worin x und y für Atom-% stehen, x in einen Bereich $48 \leqq x \leqq 52$ fällt und y in einem Bereich $0,05 \leqq y \leqq 5$ liegt, enthält, in einem Verfahren zum Aufzeichnen von Information, umfassend die Schritte von:
Initialisieren der Aufzeichnungsschicht (13) durch kontinuierliche Bestrahlung mit einem Lichtstrahl mit niedriger Leistung und einer langen Impulsbreite, um die Aufzeichnungsschicht (13) in eine kristalline Phase zu bringen,
Aufzeichnen von Information durch Bestrahlen der initialisierten Schicht (13) mit einem impulsähnlichen Lichtstrahl mit einer hohen Leistung und einer kurzen Impulsbreite, um die kristalline Phase in eine Mischphase umzuwandeln, in welcher Kristallkörner in einer amorphen Phase vorliegen, und
Löschen aufgezeichneter Information durch Einstrahlen eines Lichtstrahles mit einer niedrigen Leistung und einer langen Impulsbreite, um die Mischphase in eine kristalline Phase umzuwandeln.

2. Verwendung nach Anspruch 1, dadurch gekennzeichnet, daß das Verfahren weiterhin einen Schritt des Bildens einer ersten Schutzschicht zwischen dem Substrat und der Aufzeichnungsschicht aufweist.

3. Verwendung nach Anspruch 2, dadurch gekennzeichnet, daß das Verfahren weiterhin einen Schritt des Bildens einer zweiten Schutzschicht auf der Aufzeichnungsschicht aufweist.

4. Verwendung nach Anspruch 3, dadurch gekennzeichnet, daß das Verfahren weiterhin einen Schritt des Bildens einer Oberflächenschicht auf der zweiten Schutzschicht aufweist.

5. Verwendung nach Anspruch 3, dadurch gekennzeichnet, daß die ersten und zweiten Schutzschichten ein dielektrisches Material enthalten.

6. Verwendung nach Anspruch 4, dadurch gekennzeichnet, daß die Oberflächenschicht ein Harz enthält.


## Revendications

1. Utilisation d'un milieu de mémorisation comportant un substrat (11) ; et une couche d'enregistrement (13) supportée sur ledit substrat (11) et contenant un alliage de $(In_{100-x}Sb_x)_{100-y}Te_y$, x et y étant en % atomiques et x tombant dans la plage de $48 \leqq x \leqq 52$ et y tombant dans la plage de $0,05 \leqq y \leqq 5$ ;
dans un procédé d'enregistrement d'information comportant les phases consistant à :
initialiser ladite couche d'enregistrement (13) par irradiation continue avec un faisceau de lumière présentant une faible puissance et une grande largeur d'impulsion pour rendre ladite couche d'enregistrement (13) dans une phase cristalline ;
enregistrer l'information en irradiant la couche initialisée (13) avec un faisceau de lumière analogue à des impulsions présentant une puissance élevée et une faible largeur d'impulsion pour convertir la phase cristalline en une phase mélangée dans laquelle les grains de cristal existent dans une phase amorphe ; et

effacer l'information enregistrée en irradiant un faisceau de lumière présentant une faible puissance et une grande largeur d'impulsion pour convertir la phase mélangée en la phase cristalline.

2. Utilisation selon la revendication 1, caractérisée en ce que ledit procédé comporte au surplus une phase consistant à former une première couche protectrice entre ledit substrat et ladite couche d'enregistrement.

3. Utilisation selon la revendication 2, caractérisée en ce que ledit procédé comporte au surplus une phase consistant à former une seconde couche protectrice sur ladite couche d'enregistrement.

4. Utilisation selon la revendication 3, caractérisée en ce que ledit procédé comporte au surplus une phase consistant à former une couche de surface sur ladite seconde couche protectrice.

5. Utilisation selon la revendication 3, caractérisée en ce que lesdites première et seconde couches contiennent une matière diélectrique.

6. utilisation selon la revendication 4, caractérisée en ce que ladite couche de surface contient une résine.

FIG. 1

FIG. 2

F I G. 3

F I G. 4

F I G.   5